# EUROPÄISCHE PATENTSCHRIFT

(11) **EP 0 699 104 B1**
(45) Veröffentlichungstag und Bekanntmachung des Hinweises auf die Patenterteilung: **06.08.1997**
(21) Anmeldenummer: 94916929.6
(22) Anmeldetag: 04.05.1994
(51) Int. Cl.: B01J 13/00, C01B 33/158, C01B 33/16, B01J 37/03, B01J 37/34

(54) **VERFAHREN ZUR UNTERKRITISCHEN TROCKNUNG VON AEROGELEN**
METHOD FOR THE SUB-CRITICAL DRYING OF AEROGELS
PROCEDE DE SECHAGE SOUS-CRITIQUE D'AEROGELS

(30) Priorität: 18.05.1993 DE 4316540
(43) Veröffentlichungstag der Anmeldung: 06.03.1996
(73) Patentinhaber: HOECHST AKTIENGESELLSCHAFT, 65929 Frankfurt am Main (DE)
(72) Erfinder: JANSEN, Rolf-Michael, D-65799 Kelkheim (DE); KESSLER, Birgit, D-60529 Frankfurt am Main (DE); WONNER, Johann, D-60386 Frankfurt (DE); ZIMMERMANN, Andreas, D-64347 Griesheim (DE)
(86) Internationale Anmeldenummer: EP9401413
(87) Internationale Veröffentlichungsnummer: WO9426406

(56) Entgegenhaltungen:
- EP-A- 0 171 722
- CA-A- 1 189 052
- US-A- 4 190 457
- US-A- 4 970 397
- US-A- 5 081 163
- CHEMICAL ABSTRACTS, vol. 80, no. 10, 11. März 1974, Columbus, Ohio, US; abstract no. 52623b, BUTSKO 'Effect of an electric field on silica gel structure' Seite 316 ;Spalte L ;
- "Trockner und Trocknungstechnik", K.Kroll, Springer Verlag 1978, Seite 409.

## Beschreibung

Unter einem "Sol" wird ein kolloides, flüssiges System verstanden, in dem die dispergierten Partikel (Größe 1 bis 1000 nm) entweder Feststoffe oder Makromoleküle sind.

Ein "Gel" ist ein kolloides System mit Feststoffcharakter, in dem die kolloiden Bestandteile ein kontinuierliches (interpenetrierendes) Netzwerk in einem dispergierenden Medium bilden, dessen Kinetik geringer als die der kolloiden Bestandteile ist. Die dispergierten Bestandteile werden durch kovalente Bindungen, Wasserstoffbrücken, Dipolkräfte, van der Waals Kräfte und/oder durch mechanische Verschlingungen zusammengehalten.

Die Gele werden hinsichtlich ihres dispergierenden Mediums (Wasser, Alkohol, organische Lösungsmittel, Luft) unterteilt in Hydrogele für Wasser, Alkogele für Alkohol, Lyogele für organische Lösungsmittel und Aerogele für Luft.

Wenn Luft als Dispergiermittel enthalten ist, wird zusätzlich nach der Art der Trocknung/Herstellung unterschieden:

### Xerogel:

Wurde die Flüssigkeit des Gels durch einfaches Trocknen unter Bildung einer Flüssig-Dampf-Grenzphase entfernt, so wird das getrocknete Gel als "Xerogel" bezeichnet.

### Aerogel:

Wurde die Flüssigkeit des Ges oberhalb ihres kritischen Punktes und Drucks (überkritische Bedingungen) entfernt, so wird das getrocknete Gel als "Aerogel" bezeichnet. Aufgrund der überkritischen Bedingungen wird keine Grenzschicht ausgebildet.

### Cryogel:

Wurde die Flüssigkeit durch Gefriertrocknung entfernt, so wird das getrocknete Produkt als "Cryogel" bezeichnet. Hier wird die Fest-Gas-Grenzschicht durch Sublimation überwunden.

Im folgenden sind gemäß vorstehender Definition unter Aerogelen auch Xerogele und Cryogele zu verstehen.

Im allgemeinen sind Aerogele hochporöse Materialien aus Silizium- oder Metalloxid, die sich durch besonders niedrige Dichten von 20 bis 300 kg/m³ bei extrem hohen inneren Oberflächen von über 1000 m²/g auszeichnen. Aufgrund dieser Eigenschaften eignen sich Aerogele in hervorragender Weise als Wärme- und Schalldämmstoffe, als Katalysatortrager und als Adsorbentien.

Die Herstellung von Aerogelen kann nach dem Stand der Technik auf zwei verschiedenen Wegen über einen Sol-Gel-Prozeß mit anschließender überkritischer Trocknung erfolgen.

Beim sogenannten Kistler-Verfahren (S. S. Kistler, J. Phys. Chem. 36 (1932), S. 52 bis 64) wird Wasserglas als Ausgangsstoff verwendet. Durch Ansäuern von Wasserglas mit HCl oder H₂SO₄ wird ein Silica-Hydrogel erzeugt, das anschließend durch Auswaschen mit Wasser von Alkalimetallionen befreit wird. Im Hydrogel enthaltenes Wasser wird danach in einem Schritt gegen 95 %igen Alkohol (Ethanol, Methanol) vollständig ausgetauscht. Anschließend erfolgt die überkritische Trocknung des entstandenen Alkogel im Autoklaven.

Da die Trocknung von Alkogelen hohe Temperaturen und hohe Drücke erfordert, wurde ein Trocknungsverfahren aus CO₂ entwickelt [EP 171 722], wobei vor der überkritischen Trocknung das organische Lösungsmittel gegen CO₂ ausgetauscht wird. Die überkritische Trocknung aus CO₂ erfolgt bei wesentlich geringeren Temperaturen (Tₖ = 31,1°C, pₖ = 73,9 bar).

Das zweite Verfahren zur Herstellung von Aerogelen nach dem Stand der Technik geht direkt von Alkogelen aus [DE-A-18 11 353, US-A-36 72 833]. Zur Erzeugung von SiO₂-Aerogelen werden Tetramethoxysilan in Methanol bzw. in Ethanol mit einer genau dosierten Menge Wasser und Katalysator versetzt. Bei der Hydrolyse bildet sich unter Alkohol-Abspaltung Kieselsäure, die wiederum unter H₂O-Abspaltung ein SiO₂-Gel ausbildet (Sol/Gel-Prozeß). Das so entstandene Alkogel wird überkritisch im Autoklaven getrocknet. Nach diesem Verfahren lassen sich auch organische Aerogele aus Melaminformaldehydharzen und Resorcinformaldehydharzen herstellen [US-A-50 86 085, US-A-50 81 163, US-A-49 97 804, US-A-48 73 218].

Die Nachteile überkritischer Trocknungsverfahren sind die Temperatur- und Druckbedingungen sowie eine diskontinuierliche Betriebsweise. Bei der Trocknung von wasserhaltigen Gelen sind Temperaturen von mindestens 370°C und Drucke von 220 bar erforderlich. Bei der Trocknung von methanolhaltigen Gelen sind Temperaturen von mindestens 240°C und Drucken von mindestens 81 bar erforderlich. Selbst bei einem Austausch des organischen Lösungsmittels gegen CO₂ und dessen Trocknung erfolgt bei Drucken von mindestens 74 bar und Temperaturen von mindestens 31°C.

In der US-A-4,190,457 wird ein Verfahren zur Herstellung von anorganischen Xerogelen offenbart, bei dem das Hydrogel im Vakuum oder an der Luft z.B. in einem Ofen oder mit einer Wärmelampe unterkritisch getrocknet wird.

Die Nachteile der unterkritischen Trocknung bei Normaldruck und der Wärmezufuhr durch Kontakt, Konvektion bzw. IR-Strahlung bestehen darin, daß die entstehenden Kapillarkräfte mehr oder weniger zum Gelkollaps führen. Diese Gefahr besteht besonders bei Hydrogelen oder Lyogelen mit niedrigem Feststoffgehalt.

Bei der überkritischen Trocknungstechnik wird das zu trocknende Gel solchen Temperatur- und Druckbedingungen unterworfen, daß der kritische Punkt des verwendeten Lösungsmittels mindestens erreicht wird. Bei der unterkritischen Trocknungstechnik wird das zu trocknende Gel Temperatur- und Druckbedingungen unterworfen, welche unterhalb des kritischen Punktes des verwendeten Lösungsmittels liegen, vorzugsweise bei Normaldruck.

Aufgabe der vorliegenden Erfindung war es ein schonendes Trockungsverfahren zur Gewinnung von Aerogelen aus Hydrogelen (Gele, die in Wasser vorliegen) oder Lyogelen (Gele, die in einem organischen Lösungsmittel vorliegen) bereitzustellen, das die Nachteile der bekannten Trocknungsverfahren nicht aufweist und technisch gut durchführbar ist.

Es wurde gefunden, daß man Aerogele durch Trocknung anorganischer und organischer Hydrogele oder Lyogele unter Erhalt ihrer Struktur gewinnt, indem das Hydrogel oder Lyogel durch dielektrische Trocknungsverfahren getrocknet wird. Dielektrische Trockungsverfahren sind Trocknungsverfahren, bei denen Energiezufuhr durch elektromagnetische Wellen z.B. Mikrowellentrocknung oder Hochfrequenztrocknen erfolgt. Bei der Hochfrequenztrocknung mit Radiowellen werden Frequenzen zwischen 1 MHz und 1000 MHz eingesetzt, bei der Mikrowellentrocknung wird mit Frequenzen zwischen 10³ MHz und 10⁶ MHz gearbeitet. Bei der Trocknung müssen die Auswahl des verwendeten Gels, des Lösungsmittels und die Probengeometrie genau auf die eingetragene Energie abgestimmt werden, damit sich ein Gleichgewicht zwischen den Kapillarkräften und den im Inneren des Gels verdampfenden Lösungsmittel einstellen kann. Dies kann z.B. durch Zeittaktung oder Variation der Mikrowellenleistung geschehen. Durch dieses Trocknungsverfahren läßt sich ein Schrumpf und eine Rißbildung in dem Aerogel weitgehend vermeiden oder entscheidend reduzieren.

Hydrogele bzw. Lyogele werden nach bekannten Verfahren (Jeffrey Brinker, George W. Scherer, Sol/Gel Cience: The physics and chemistry of sol/gel processing, academic press Ltd., London, 1990; US-A-5 081 163; US-A-4 873 218; US-A-4 997 804) gewonnen. Als Ausgangsstoffe werden Siliziumverbindungen, Aluminiumverbindungen, Melaminformaldehydverbindungen, Resorcinharze, Phenolharze, Aminoplaste, Harnstoffformaldehydharze sowie Compositmaterialien, bestehend aus einem der oben beschriebenen Gele in Verbindung mit einem technischen Kunststoff, z.B. Polystyrol, oder Mischungen davon verwendet.

Bevorzugt werden Siliziumverbindungen und Melaminformaldehydverbindungen eingesetzt.

Die Gele können in beliebiger räumlicher Form vorliegen, z. B. in unregelmäßigen Stücken, Quadern, Kugeln, Würfeln, Platten und sphärischen Partikeln vorzugsweise in Granulaten, Laminaten und Formteilen. Der Feststoffgehalt beträgt 1 Gew.-% bis 40 Gew.-%. Laminate und Formteile haben eine Dicke von 0,001 bis 0,2 m, vorzugsweise 0,001 bis 0,1 m, besonders bevorzugt 0,001 bis 0,05 m. Granulate haben einen mittleren Durchmesser von 0,1 bis 25 mm.

Die zu trocknenden Gele können für die dielektrische Trocknung in verschiedenen technischen Lösungsmittel vorliegen, wie z. B. Wasser; Alkohole von C₁ bis C₈, vorzugsweise C₁ bis C₄, besonders bevorzugt Methanol, Ethanol, Isopropanol, Isobutanol; Ether, bevorzugt Diisopropylether, Tetrahydrofuran, Dioxan, Ketone, bevorzugt Aceton, Cyclohexanon, und Ester, bevorzugt Essigsäureethylester und Essigsäurebutylester, sowie schwach polare Lösungsmittel, wie Methylenchlorid oder Chloroform. Die Verwendung von aromatischen und aliphatischen Kohlenwasserstoffen von C₁ bis C₁₀, vorzugsweise Toluol; Fluorchlorkohlenwasserstoffen und Fluoralkanen als Beispiel für unpolare Lösungsmittel ist ebenfalls durchführbar.

Die Oberflächenspannung der eingesetzten Lösungsmittel kann durch Zusatz von ionischen und nichtionischen Tensiden von 0,1 Vol % bis 10 Vol % gezielt vermindert werden und damit die Dissipation der elektromagnetischen Energie erhöht werden.

Als vorteilhaft für das erfinderische Verfahren hat es sich erwiesen, wenn die zu trocknenden Gele mit einer oberflächenmodifzierenden Verbindung behandelt werden. Geeignete oberflächenmodifizierende Verbindungen sind solche der allgemeinen Formel RₓMX_{y}, worin R C₆-C₁₄-Aryl oder C₁-C₆-Alkyl, vorzugsweise Methyl oder Ethyl, ist, M Si oder Al, vorzugsweise Si, ist, X Halogen, vorzugsweise Chlor ist, x und y jeweils eine ganze Zahl von 1 bis 3 sind, wobei x und y zusammen so groß sind, daß sie der 3- bzw. 4-Wertigkeit von M gerecht werden.

Die oberflächenmodifizierende Verbindung kann in einer Menge von 0,1 bis 20 Gew.-%, vorzugsweise 0,5 bis 10 Gew.-%, insbesondere 1 bis 5 Gew.-%, bezogen auf das Gel, eingesetzt werden. Es können auch Mischungen oberflächenmodifizierender Verbindungen eingesetzt werden.

Als Lösungsmittel werden dabei bevorzugt solche ausgewählt, die keine oder nur geringe CH-Aciditat besitzen wie aromatische und aliphatische Kohlenwasserstoffe von C₁ bis C₁₀, Fluorchlorkohlenwasserstoffe, Ether, vorzugsweise Diisopropylether, THF oder Dioxan, Ketone, vorzugsweise Aceton oder Cyclohexanon, Ester, vorzugsweise Essigsäureethylester oder Essigsäurebutylester, sowie schwach polare Lösungsmittel wie Methylenchlorid oder Chloroform.

Gegebenenfalls ist es zweckmäßig, das Lösungsmittel nach der Oberflächenbehandlung gegen ein polareres Lösungsmittel, das für dielektrische Trocknungsverfahren geeignet ist, auszutauschen.

Die dielektrische Trocknung läßt sich im kontinuierlichen wie auch im diskontinuierlichen Betrieb, unter Verwendung verschiedener Frequenzen, ausführen. Die eingesetzten Frequenzen liegen im Bereich der Hochfrequenz von 1 bis 1 000 MHz und im Bereich der Mikrowelle von 1 000 bis 1 000 000 MHz. Besonders bevorzugt sind die, von I.C.C. (International Communication Commission, reservierten Frequenzbereiche für industrielle, wissenschaftliche und medizinische Anwendungen (I.S.M.). Die freigegebenen Frequenzen sind im Hochfrequenzbereich 13,56 MHz, 27,12 MHz und 40,68 MHz, sowie im Mikrowellenbereich 434 MHz, 915 MHz, 2450 MHz, 5800 MHz und 22125 MHz.

### Beispiel 1:

### Herstellung eines Melamin-Formaldehyd-Aerogels aus dem Handelsprodukt "®Madurit MW 167" (Cassella AG):

Eine 10%ige wäßrige Lösung des Vorkondensats "®Madurit MW 167" wird durch Zugabe von 50%iger Natronlauge auf einen pH-Wert von 3.0 eingestellt. 1l der eingestellten Lösung werden abgenommen und mit 76.8 g Nonylphenolpolyglykolether (®Arcopal, Hoechst AG) versetzt. Anschließend wird die Lösung filtriert und in flache Gefäße eingefüllt und luftdicht verschlossen. Die Proben werden zur Gelbildung 7 Tage lang bei 85°C aufbewahrt. Danach werden die Proben aus der Form herausgenommen, mit 0.1 %iger Natronlauge und anschließend Wasser neutralisiert und gewaschen.

Zur unterkritischen Mikrowellentrocknung wird die Probe in einen Mikrowellenofen eingebracht. Die Frequenz der Mikrowelle beträgt 2.450 ± 25 MHz. Die eingebrachte Energie beträgt 0,1 kW pro 100 g Gel. Nach der Trocknung wird eine nur geringe Dichte von 0.3 g/cm³ gemessen.

Zu Vergleichsmessungen werden zwei Proben untersucht, die an Luft oder unter überkritischen Bedingungen mit CO₂ getrocknet werden. Die Dichte der nach 4 Tagen an Luft unter Raumtemperatur getrockneten Probe beträgt 0.7 g/cm³. Die zweite Vergleichsprobe wird nach einem Lösungsmittelaustausch zu Aceton unter überkritischen Bedingungen bei 31°C und 70 bar getrocknet. Die Dichte dieser Probe beträgt 0.2 g/cm³.

### Beispiel 2

### Herstellung eines Silica-Aerogels

In einem Rundkolben werden 61 ml TEOS (Tetraethylorthosilikat), 61 ml Ethanol, 4.87 ml destilliertes Wasser und 0.2 ml Salzsäure (1 molar) zusammengegeben und anschließend 2 h unter Rückfluß gekocht.

Nach Abkühlung auf Raumtemperatur wird das Sol mit 12.7 ml Ammoniumhydroxidlösung (0.5 molar) versetzt, in eine Form gegossen und 2 h bei 38°C und anschließend 24 h bei 50°C aufbewahrt.

Das ausgehärtete Gel wird aus der Form gelöst, auf Bruchstücke mit einem Durchmesser von ca. 5 mm mechanisch zerkleinert und das in den Poren enthaltene Ethanol gegen n-Hexan ausgetauscht. Hierzu wird die Probe in frisches n-Hexan gelegt, und das n-Hexan so häufig erneuert bis der Restgehalt an Ethanol im n-Hexan nach Gleichgewichtseinstellung weniger als 2 % beträgt.

Anschließend wird zu 10 g des feuchten Gels in 50 ml n-Hexan 1 g Trimethylchlorsilan (TMCS) gegeben und 24 h bei 50°C aufbewahrt. Nach Abkühlung wird die Reaktionslösung durch frisches n-Hexan ersetzt.

Das in den Poren vorhandene n-Hexan wird gegen Aceton ausgetauscht. Hierzu wird das Gel so lange in Aceton gelegt und das Aceton so häufig gewechselt, bis der Gehalt an n-Hexan im Aceton nach Einstellung des Gleichgewichts weniger als 2 % beträgt.

Zur unterkritischen Trocknung wird Granulat so in den Mikrowellenofen eingebracht, daß das acetonfeuchte Granulat mit einem Stickstoffstrom überlagert werden kann. Die Frequenz der Mikrowelle beträgt 2450 + /- 25 MHz. Die eingebrachte Energie beträgt 0,2 kW pro 100 ml Gelgranulat. Nach der Trocknung von 40 Minuten wird eine Dichte von 0,14 g/cm³ und eine Restfeuchte von 5 % Aceton gemessen. Der Volumenschrumpf beträgt 2 Vol.%.

Zu Vergleichsmessungen wurde eine entsprechende Granulatprobe an Luft 40 Minuten lang getrocknet. Die Dichte nach der Trocknung beträgt danach 0,76 g/cm³ und die Restfeuchte 70 % Aceton. Nach 150 minütiger Trocknung (Restfeuchte 5 %) beträgt der Volumenschrumpf 15 %.

## Patentansprüche

1. Verfahren zur Herstellung von Aerogelen durch unterkritische Trocknung von anorganischen und organischen Hydrogelen und Lyogelen zu Aerogelen, dadurch gekennzeichnet, daß dielektrische Trocknungsverfahren angewendet werden.

2. Verfahren gemäß Anspruch 1, dadurch gekennzeichnet, daß man für die dielektrische Trocknung, Mikrowellentrocknung oder Hochfrequenztrocknung verwendet.

3. Verfahren gemäß Anspruch 1 und 2, dadurch gekennzeichnet, daß Hydrogele in Form von Granulaten, Laminaten und Formteilen getrocknet werden.

4. Verfahren gemäß Anspruch 1, 2 und 3, dadurch gekennzeichnet, daß man Hydrogele oder Lyogele verwendet, die aus Siliziumverbindungen, Aluminiumverbindungen, Melaminformaldehydverbindungen, Resorcinharzen, Phenolharzen, Aminoplasten, Harnstoffformaldehydharzen sowie Compositematerialien oder Mischungen davon hergestellt werden.

## Claims

1. A method for preparing aerogels by subcritical drying of inorganic and organic hydrogels and lyogels to give aerogels, which comprises using dielectric drying methods.

2. The method as claimed in claim 1, wherein microwave drying or high-frequency drying is used for the dielectric drying.

3. The method as claimed in claims 1 and 2, wherein hydrogels in the form of granules, laminates and shaped pieces are dried.

4. The method as claimed in claims 1, 2 and 3, wherein hydrogels or lyogels are used which are prepared from silicon compounds, aluminum compounds, melamine-formaldehyde compounds, resorcinol resins, phenol resins, aminoplastic resins, urea-formaldehyde resins or composite materials or mixtures thereof.

## Revendications

1. Procédé pour la préparation d'aérogels par séchage subcritique des hydrogels et des lyogels inorganiques et organiques pour obtenir des aérogels, caractérisé en ce que l'on applique un procédé de séchage diélectrique.

2. Procédé selon la revendication 1, caractérisé en ce que l'on utilise le séchage diélectrique, le séchage au microondes ou le séchage à hautes fréquences.

3. Procédé selon les revendications 1 et 2, caractérisé en ce que l'on sèche des hydrogels sous forme de granulés, de stratifiés et de pièces moulées.

4. Procédé selon les revendication 1, 2 et 3, caractérisé en ce que l'on utilise des hydrogels ou des lyogels, que l'on a préparés à partir de composés de silicium, de composés d'aluminium, de composés de mélamine formaldéhyde, de résines de résorcine, de résines phénoliques, d'aminoplastes, de résines urée-formaldéhyde ainsi que de matériaux composites ou de leurs mélanges.
